(19) Europäisches Patentamt
European Patent Office
Office européen des brevets

(11) **EP 3 155 734 B1**

(12) **EUROPEAN PATENT SPECIFICATION**

(45) Date of publication and mention
of the grant of the patent:
**31.07.2019 Bulletin 2019/31**

(51) Int Cl.:
***H04B 17/00*** *(2015.01)*

(21) Application number: **14894556.1**

(22) Date of filing: **12.06.2014**

(86) International application number:
**PCT/CN2014/079781**

(87) International publication number:
**WO 2015/188361 (17.12.2015 Gazette 2015/50)**

(54) **METHOD, APPARATUS AND COMPUTER PROGRAM**

VERFAHREN, VORRICHTUNG UND COMPUTERPROGRAMM

PROCÉDÉ, APPAREIL ET PROGRAMME D'ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2017 Bulletin 2017/16**

(73) Proprietor: **Nokia Solutions and Networks Oy
02610 Espoo (FI)**

(72) Inventors:
• **MIAO, Deshan
Beijing 100016 (CN)**
• **MOU, Jianhong
Beijing 100102 (CN)**
• **ZHENG, Naizheng
Beijing 100098 (CN)**
• **PAJUKOSKI, Kari Pekka
FI-90240 Oulu (FI)**

(74) Representative: **Style, Kelda Camilla Karen et al
Page White & Farrer
Bedford House
John Street
London, WC1N 2BF (GB)**

(56) References cited:
EP-A1- 1 551 143         WO-A2-2009/023825
CN-A- 102 158 272       CN-A- 102 396 105
CN-A- 103 107 836       US-A1- 2005 128 953

• **QUALCOMM EUROPE: "Calibration Procedures
for TDD Beamforming", 3GPP DRAFT;
R1-080494, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. Sevilla, Spain; 20080109, 9 January
2008 (2008-01-09), XP050109010, [retrieved on
2008-01-09]**
• **Wikipedia: "Channel access method", , 4 October
2013 (2013-10-04), XP055459851, Retrieved from
the Internet:
URL:https://en.wikipedia.org/w/index.php?t
itle=Channel_access_method&oldid=575703725
[retrieved on 2018-03-15]**

**Description**

Background

The invention relates to a method, apparatus and computer program, and in particular but not exclusively to a method, apparatus and computer program for antenna calibration.

A communication system can be seen as a facility that enables communication sessions between two or more entities such as fixed or mobile communication devices, base stations, servers and/or other communication nodes. A communication system and compatible communicating entities typically operate in accordance with a given standard or specification which sets out what the various entities associated with the system are permitted to do and how that should be achieved. For example, the standards, specifications and related protocols can define the manner how communication devices can access the communication system and how various aspects of communication shall be implemented between communicating devices. A communication can be carried on wired or wireless carriers. In a wireless communication system at least a part of the communication between at least two stations occurs over a wireless link.

Examples of wireless systems include public land mobile networks (PLMN) such as cellular networks, satellite based communication systems and different wireless local networks, for example wireless local area networks (WLAN). A wireless system can be divided into cells, and hence these are often referred to as cellular systems. A cell is provided by a base station. Cells can have different shapes and sizes. A cell can also be divided into sectors. Regardless of the shape and size of the cell providing access for a user equipment, and whether the access is provided via a sector of a cell or a cell, such area can be called radio service area or access area. Neighbouring radio service areas typically overlap, and thus a communication in an area can listen to more than one base station.

A user can access the communication system by means of an appropriate communication device. A communication device of a user is often referred to as user equipment (UE) or terminal. A communication device is provided with an appropriate signal receiving and transmitting arrangement for enabling communications with other parties. Typically a communication device is used for enabling receiving and transmission of communications such as speech and data. In wireless systems a communication device provides a transceiver station that can communicate with another communication device such as e.g. a base station of an access network and/or another user equipment. The communication device may access a carrier provided by a station, for example a base station, and transmit and/or receive communications on the carrier.

Examples of communication systems attempting to satisfy the increased demands for capacity are architectures that are being standardized by the 3rd Generation Partnership Project (3GPP), such as the long-term evolution (LTE), or the Universal Mobile Telecommunications System (UMTS) radio-access technologies. The LTE aims to achieve various improvements, for example reduced latency, higher user data rates, improved system capacity and coverage, reduced cost for the operator and so on. A further development of the LTE is often referred to as LTE-Advanced. The various development stages of the 3GPP LTE specifications are referred to as releases. In LTE-Advanced the network nodes can be wide area network nodes such as a macro eNodeB (eNB) which may, for example, provide coverage for an entire cell. Alternatively in LTE-Advanced, network nodes can be small area network nodes such as Home eNBs (HeNB) (femto cells) or pico eNodeBs (pico-eNB). HeNBs may be configured to support local offload and may support any UE or UEs belonging to a closed subscriber group (CSG) or an open subscriber group (OSG). Pico eNBs can, for example, be configured to extend the range of a cell. In some instances a combination of wide area network nodes and small area network nodes can be deployed using the same frequency carriers (e.g. co-channel deployment). Currently, the Fifth Generation (5G) radio system is under investigation and development, and it may be commercially available around 2020.

In a local area system where there is dense deployment (i.e. multiple access points in a relatively small area), some of the access points (APs) are connected to the network with a wireline connection whereas some other APs may act as relays having only wireless connection (self-backhauling) to the network. The wireline connection may provide X2 or a similar type of connection between the access points. As the deployment is dense, it is likely that most of the access points (if not all) can communicate with each other over the wireless radio channel.

EP1551143A1 relates to techniques enhance the communication performance in wireless communication systems.

US2005/128953A1 relates to techniques to calibrate the downlink and uplink channels to account for differences in the frequency responses of the transmit and receive chains at an access point and a user terminal.

QUALCOMM EUROPE: "Calibration Procedures for TDD Beamforming" relates to techniques to perform calibration so that the channel on one link may be estimated by measuring a reference signal on another link.

Summary

The invention relates to methods, apparatuses and computer program as set forth in the claims.

Brief description of drawings

Some embodiments will now be described by way of example only with reference to the following Figures in which:

Figure 1 shows a schematic diagram of a network according to some embodiments;
Figure 2 shows a schematic diagram of a communication device according to some embodiments;
Figure 3 shows a schematic diagram of a control apparatus according to some embodiments;
Figure 4 shows an example of UE assisted AP calibration;
Figure 5 shows an example of inter-AP calibration;
Figure 6 shows an overview of multi-layer access points;
Figure 7 is a flowchart showing a calibration procedure between APs where an X2 interface is available;
Figure 8 is a flowchart showing a calibration procedure between APs over an air-interface.

Detailed description

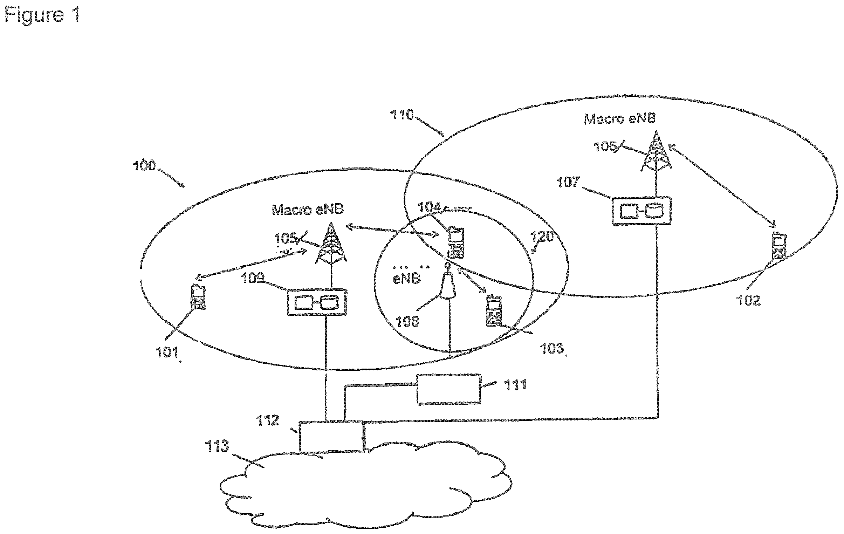

In the following certain exemplifying embodiments are explained with reference to a wireless or mobile communication system serving communication devices. Before explaining in detail the exemplifying embodiments, certain general principles of a wireless communication system, access systems thereof, and communication devices are briefly explained with reference to Figures 1 to 3 to assist in understanding the technology underlying the described examples.

A communication device or user equipment 101, 102, 103, 104 is typically provided wireless access via at least one base station or similar wireless transmitter and/or receiver node of an access system. In Figure 1 three neighbouring and overlapping access systems or radio service areas 100, 110 and 120 are shown being provided by base stations 105, 106, and 108.

However, it is noted that instead of three access systems, any number of access systems can be provided in a communication system. An access system can be provided by a cell of a cellular system or another system enabling a communication device to access a communication system. A base station site 105, 106, 108 can provide one or more cells. A base station can also provide a plurality of sectors, for example three radio sectors, each sector providing a cell or a subarea of a cell. All sectors within a cell can be served by the same base station. A radio link within a sector can be identified by a single logical identification belonging to that sector. Thus a base station can provide one or more radio service areas. Each communication device 101, 102, 103, 104, and base station 105, 106, and 108 may have one or more radio channels open at the same time and may send signals to and/or receive signals from more than one source.

Base stations 105, 106, 108 are typically controlled by at least one appropriate controller apparatus 109, 107 so as to enable operation thereof and management of communication devices 101, 102, 103, 104 in communication with the base stations 105, 106, 108. The control apparatus 107, 109 can be interconnected with other control entities. The control apparatus 109 can typically be provided with memory capacity 301 and at least one data processor 302. The control apparatus 109 and functions may be distributed between a plurality of control units. Although not shown in Figure 1, in some embodiments each base station 105, 106 and 108 can comprise a control apparatus 109, 107.

The cell borders or edges are schematically shown for illustration purposes only in Figure 1. It shall be understood that the sizes and shapes of the cells or other radio service areas may vary considerably from the similarly sized omni-directional shapes of Figure 1.

In particular, Figure 1 depicts two wide area base stations 105, 106, which can be macro-eNBs 105, 106 in an LTE system. The macro-eNBs 105, 106 transmit and receive data over the entire coverage of the cells 100 and 110 respectively. Figure 1 also shows a smaller area base station or access point which in some embodiments can be a pico, a femto or Home eNB 108. The coverage of the smaller area base station 108 is generally smaller than the coverage of the wide area base stations 105, 106. The coverage provided by the smaller area node 108 overlaps with the coverage provided by the macro-eNBs 105, 106. Pico eNBs can be used to extend coverage of the macro-eNBs 105, 106 outside the original cell coverage 100, 110 of the macro-eNBs 105, 106. The pico eNB can also be used to provide cell coverage in "gaps" or "shadows" where there is no coverage within the existing cells 100, 110 and/or may serve "hot spots". In some embodiments, the smaller area node can be a femto or Home eNB which can provide coverage for a relatively small area such as the home. Some environments may have both pico and femto cells.

As shown, the radio service areas can overlap. Thus signals transmitted in an area can interfere with communications in another area (macro to macro, pico/femto to either one or both of the macro cells, and/or pico/femto to pico/femto).

The communication devices 101, 102, 103, 104 can access the communication system based on various access techniques, such as code division multiple access (CDMA), or wideband CDMA (WCDMA). Other examples include time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

Some non-limiting examples of the recent developments in communication systems are the long-term evolution (LTE) of the Universal Mobile Telecommunications System (UMTS) that is being standardized by the 3rd Generation Partnership Project (3GPP). As explained above, further development of the LTE is referred to as LTE-Advanced. Non-limiting examples of appropriate access nodes are a base station of a cellular system, for example what is known as NodeB (NB) in the vocabulary of the 3GPP specifications. The LTE employs a mobile architecture known as the Evolved Universal Terrestrial Radio Access Network (E-UTRAN). Base stations of such systems are known as evolved Node Bs (eNBs) and may provide E-UTRAN features such as user plane Radio Link Control/Medium Access Control/Physical layer protocol (RLC/MAC/PHY) and control plane Radio Resource Control (RRC) protocol terminations towards the user devices. Other examples of radio access systems include those provided by base stations of systems that are based on technologies such as wireless local area network (WLAN) and/or WiMax (Worldwide Interoperability for Microwave Access). Fifth Generation (5G) radio systems may be commercially available around 2020.

In Figure 1 the base stations 105, 106, 108 of the access systems can be connected to a wider communications network 113. A controller apparatus 107, 109 may be provided for coordinating the operation of the access systems. A gateway function 112 may also be provided to connect to another network via the network 113. The smaller area base station 108 can also be connected to the other network by a separate gateway function 111. The base stations 105, 106, 108 can be connected to each other by a communication link for sending and receiving data. The communication link can be any suitable means for sending and receiving data between the base stations 105, 106 and 108 and in some embodiments the communication link is an X2 link.

The other network may be any appropriate network. A wider communication system may thus be provided by one or more interconnect networks and the elements thereof, and one or more gateways may be provided for interconnecting various networks.

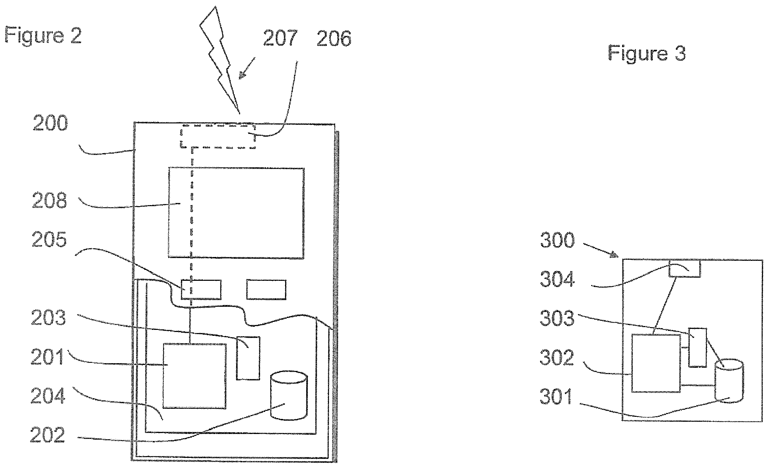

The communication devices will now be described in more detail with reference to Figure 2. Figure 2 shows a schematic, partially sectioned view of a communication device 101 that a user can use for communication. Of course the other communication devices shown in Figure 1 may have the same or similar features. Such a communication device is often referred to as user equipment (UE) or terminal. An appropriate communication device may be provided by any device capable of sending and receiving radio signals. The communication device may be mobile or may be generally stationary. Non-limiting examples include a mobile station (MS) such as a mobile phone or what is known as a 'smart phone', a portable computer provided with a wireless interface card or other wireless interface facility, personal data assistant (PDA) provided with wireless communication capabilities, a computer or any combinations of these or the like.

A communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. User may also be provided broadcast or multicast data. Non-limiting examples of the content include downloads, television and radio programs, videos, advertisements, various alerts and other information.

The device 101 may receive signals over an air interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the communication device.

The communication device is also typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204.

The user may control the operation of the communication device by means of a suitable user interface such as key pad 205, voice commands, touch sensitive screen or pad, combinations thereof or the like. A display 208, a speaker and a microphone can be also provided. Furthermore, a communication device may comprise appropriate connectors (either wired or wireless) to other devices and/or for connecting external accessories, for example hands-free equipment, thereto.

Figure 3 shows an example of a control apparatus 109 for a communication system, for example to be coupled to and/or for controlling a station of an access system. In some embodiments the base stations 105, 106, and 108 comprise a control apparatus 109. In some embodiments, each base station will have a control apparatus. In other embodiments the control apparatus can be another network element. The control apparatus 109 can be arranged to provide control of communications by communication devices that are in the service area of the system. The control apparatus 109 can be configured to provide control functions in association with generation and communication of transmission patterns and other related information by means of the data processing facility in accordance with certain embodiments described below. For this purpose the control apparatus 109 comprises at least one memory 301, at least one data processing unit 302, 303 and an input/output interface 304. Via the interface the control apparatus can be coupled to a receiver and a transmitter of the base station. The control apparatus 109 can be configured to execute an appropriate software code to provide the control functions.

In TDD systems the reciprocity property of the radio channel can be exploited, for example in transmit beamforming. Where reciprocity exists, the downlink (DL) and uplink (UL) characteristics are the same when the same frequency band and the same TX/RX is used. Where the DL and UL characteristics match exactly then the channel estimate of the UL direction at the transmitter can directly be utilized for link adaptation in the DL. Beamforming is a signal processing technique used in sensor/antenna arrays for directional signal transmission and reception. Channel State Information (CSI) may be calculated from the received signal and, using the reciprocity principle, transmit beamforming weights can be calculated from the CSI. A beamforming weight, or coefficient, is a weighting vector (which may be dedicated) to apply in transmission or reception, and may be used to increase link SINR (signal to interference plus noise ratio), and may correspond to actual channel state information.

In practice the receiver and transmitter chains may not be identical. In this context "chain" means TX or RX signal transmission path, for example, in TX, it includes D/A converter, RF path and antenna, while in RX, it includes A/D converter, RF path and antenna element. So a link may be considered to comprise the air wireless channel plus TX/RX chain. The differences between the chains may be compensated by a procedure referred to as antenna calibration. This calibration may be used by an AP to do non-codebook precoding and beamforming.

In a typical calibration procedure, differences between the transmitter and receiver chains are calculated and can be compensated with calibration coeffcients. In order to calculate the calibration coefficients the transmitter to be calibrated usually needs estimates of the received signals along with CSI measured from a transmitted reference signal that is fed back from another assisting device. To enable good performance the CSI feedback is preferably of high accuracy. Therefore in practice the estimations are integrated over a period of time, and the amount of data to be fed back from the assisting device may be large. For instance, an eNB may select a UE to assist it to complete a calibration, as shown in 3GPP R1- 080494.

Channel conditions may vary quickly, and therefore UE assisted calibration may degrade performance because the UE needs to estimate the signal from an AP and send assisted signal to an AP (which may be the same AP). If used in co-ordinated multipoint (CoMP) operation, multiple APs may need to assign a single UE to assist with finishing the calibration, which may not be flexible in a dense AP scenario. This may be burdensome for the UE.

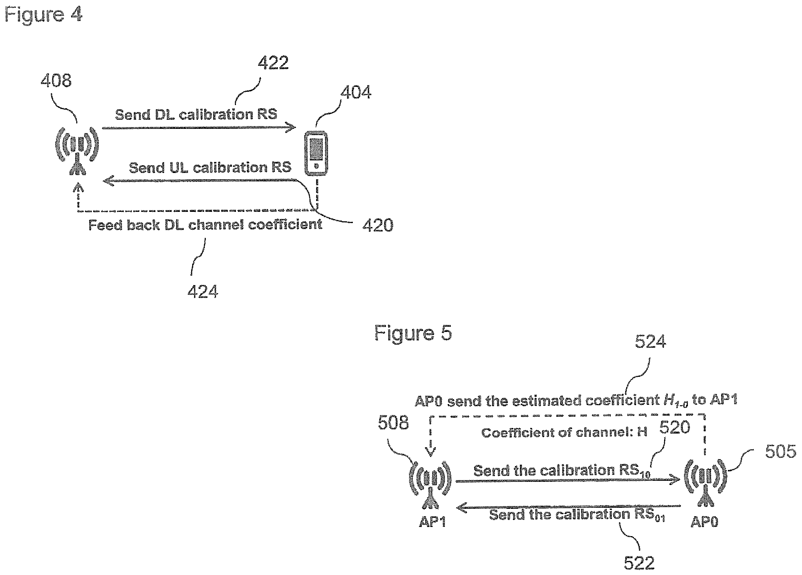

Figure 4 shows some steps of antenna calibration. The access point (AP) 408 receives the channel information according to UL calibration reference signal, and UE 404 receives the channel information according to DL calibration RS. Then the UE feeds back the DL channel coefficient to AP 408, such that the AP will have knowledge of both UL channel information and DL channel information. The AP 408 can then calculate the calibration weight according to the DL and UL channel information.

This is discussed in more detail below.

A transmit mismatch for an AP antenna i is denoted by $\tau_i$. A receive mismatch for antenna i in the AP is denoted by $\rho_i$. An effective mismatch ($\beta_i$) for each antenna i is denoted by:

$$\beta_i = \tau_i/\rho_i$$

On the UE side the transmit mismatch is denoted by $\sigma_i$. The receive mismatch is denoted by $\pi_i$. An effective mismatch for each UE ($\alpha_i$) can then be defined as:

$$\alpha_i = \pi_i/\sigma_i$$

In a first step, an effective channel from an $i^{th}$ AP antenna to a $j^{th}$ UE can be estimated.

Then, an effective channel from the $j^{th}$ UE to the $i^{th}$ AP antenna can be estimated.

This "effective channel" includes wireless channel information and TX/RX RF path information. When a receiver receives the channel information, this channel information includes TX RF chain property and wireless channel property. So the effective channel can be used to differentiate normal wireless/propagation channel on air interface.

The effective channel usually consists of three parts: the RF chain at the transmitter, the propagation channel and the RF chain at the receiver. Therefore the propagation channel may be reciprocal, but the effective channel may be non-reciprocal due to the presence of RF chain part.

Then, by the reciprocity of the channel, an effective calibration factor ($c_{ij}$) for the AP antenna i to the $j^{th}$ UE can be estimated using the following equation:

$$\tau_i \, h^D_{ij} \, \pi_j \, / \, \sigma_i \, h^U_{ji} \, \rho_{j.} = \beta_i \alpha_j$$

Here, "h" refers to the wireless/propagation channel part. D denotes downlink, and U denotes uplink.

An effective calibration vector C for the AP can then be denoted by:

$$C = (c_1, c_2, \ldots, c_M).$$

Then, for UE j, the calibration vector is given by:

$$C_j = (\beta_1 \alpha_1, \beta_2 \alpha_1, \ldots, \beta_M \alpha_1)$$

In some cases, it is only necessary to calibrate the eNB up to a scaling constant, and therefore:

$$C_j/\beta_1 \, \alpha_1 = (\beta_1 \alpha_1/\beta_1 \alpha_1, \beta_2 \alpha_1/\beta_1 \, \alpha_1, \ldots, \beta_M \alpha_1/\beta_1 \alpha_1) = (1, \beta_2/\beta_1, \ldots, \beta_M/\beta_1)$$

It has been proposed that an AP performs calibration with another AP over the air interface. This may also be extended to a situation where a cluster of APs performs calibration with another cluster of APs.

This method is discussed in more detail below, with respect to Figure 5. In the following, it is assumed that AP0 505 has implemented the calibration, and AP1 508 is to be calibrated. Also, the coefficient of Tx RF chain for AP1 508 is represented by $\alpha_{Tx}$, the coefficient of Rx RF chain for AP1 508 is $\alpha_{Rx}$, the coefficient of Tx RF chain for AP0 505 is $\beta_{Tx}$, and the coefficient of Rx RF chain for AP0 505 is $\beta_{Rx}$.

Initially, AP1 508 sends the calibration reference signals ($RS_{10}$) to AP0 505, as shown at 520.

Then, the AP0 505 estimates the channel coefficients $H_{1-0}$ based on $RS_{10}$, using the equation:

$$H_{1-0} = \alpha_{Tx} \cdot H \cdot \beta_{Rx}$$

The AP0 505 can then feedback the measured channel coefficient $H_{1-0}$ to AP1 508 as shown at 524, and sends the calibration $RS_{01}$ to AP1 508, as shown at 522.

AP1 508 then estimates the channel coefficients $H_{0-1}$ based on $RS_{01}$ from AP0 505, using the equation:

$$H_{0-1} = \beta_{Tx} \cdot H \cdot \alpha_{Rx}$$

and together with the received channel coefficient $H_{1-0}$, AP1 508 is able to calculate the calibration factor. The expected calibration factor can be expressed as:

$$\frac{H_{0-1}}{H_{1-0}} = \frac{\beta_{Tx} \cdot H \cdot \alpha_{Rx}}{\alpha_{Tx} \cdot H \cdot \beta_{Rx}} = \frac{\beta_{Tx}}{\beta_{Rx}} \cdot \frac{\alpha_{Rx}}{\alpha_{Tx}} = \gamma \Longrightarrow$$

$$\gamma \cdot \frac{\alpha_{Tx}}{\alpha_{Rx}} = \frac{\beta_{Tx}}{\beta_{Rx}}$$

where $v = \dfrac{\beta_{Tx}}{\beta_{Rx}}$ is TX/RX RF chain ratio of AP0 that has been calibrated, and a calibration target is to let TX/RX RF chain factor of AP1 508 to be equal to the TX/RX RF chain ratio of AP0 505.

Here, "$\gamma$" is a calibration coefficient. From the above formula, $\gamma$ represents the difference of TX/RX RF chain ratio of AP0 and TX/RX RF chain ratio of AP1. Assuming in this example that AP0 has been calibrated, then AP1 should be aligned with AP0. Therefore by carefully selecting the value of $\gamma$, the RF chain ratio of AP0 could be made equal to the RF chain ratio of AP1. This process represents the calibration. In a practical implementation, when an AP calculates this calibration coefficient, it may be compensated in a channel information calculation. This may make UL channel information equal to DL channel information.

Some embodiments will now be described where APs are segregated in to layers or strata to fulfil network calibration. Hereon the terms "layer" and "layers" will be used, but it will be understood that the terms "stratum" and "strata" could equally be used.

Some embodiments utilise wireless listening or communication between the APs. An AP that is "listening" may be monitoring a channel or a reference signal for information it requires.

In some embodiments there may be only one AP per layer. In other embodiments some or all layers may comprise more than one AP. In some embodiments only vertical calibration is permitted i.e. an AP may only calibrate with an AP on a different layer.

Considering an inter-AP CoMP application, each UE is associated with one CoMP cluster, and the cluster size and boundary could vary from cluster to cluster. In a centralised proposal, a central AP based antenna calibration is used where nearby APs calibrate with a central AP which has itself already been calibrated. In centralised systems, the cluster size is limited by the coverage of the central AP.

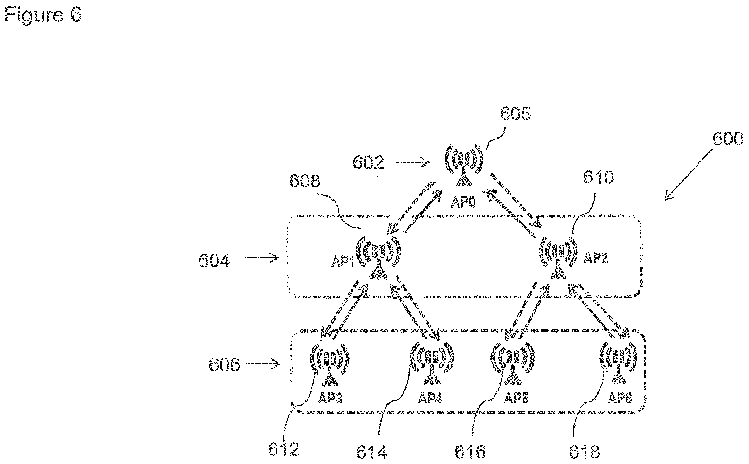

Figure 6 illustrates a layered structure according to an embodiment. A cluster of APs is segregated in to 3 layers: a first layer 602, a second layer 604, and a third layer 606. The first layer 602 comprises AP0 605. The second layer 604 comprises AP1 608, and AP2 610. The third layer 606 comprises AP3 612, AP4 614, AP5 616, and AP6 618. In this embodiment third layer 606 is considered a higher layer than second layer 604, which in turn is considered a higher layer than first layer 602.

According to this embodiment, a lower layer AP sends calibration reference signals to an AP on a higher layer. This is shown by the dashed arrows in Figure 6. The higher layer AP then sends information back to the lower layer to complete antenna calibration. This is shown by the solid arrows in Figure 6.

It will be understood that the structure of Figure 6 is by way of example only. The number of APs, the number of layers, and the number of APs in each layer may vary between embodiments. Also, in some embodiments the calibration reference signals may be sent from a higher layer to a lower layer, and information may then be sent back from the lower layer to the higher layer.

In embodiments where an X2 interface is available between the APs, then the X2 interface is used. This may decrease the signalling overhead on the air interface.

In such embodiments, calibrated APs send calibration reference signals periodically, the reference signals having a certain pattern. Un-calibrated APs monitor the reference signals according to the pattern.

Referring back to Figure 6, consider a situation where AP0 605, AP1 608 and AP2 610 are already calibrated. Then those APs will transmit calibration reference signals based on a configured pattern. The calibration signals may be broadcast. AP3 612, AP4 614, AP5 616 and AP6 618 will monitor for those reference signals.

Un-calibrated APs such as APs 612 to 618 may configure a monitoring window based on the received calibration reference signal pattern. In the monitoring window the un-calibrated APs would monitor one or more calibrated APs. In some embodiments an un-calibrated AP may choose a "best" or preferred calibrated AP to be the assistant AP. In some embodiments, an un-calibrated AP may select one best calibrated AP according to the link SINR from calibrated AP to un-calibrated AP. An un-calibrated AP will estimate the channel information according to a reference signal from best calibrated AP for the purpose of calibration.

Un-calibrated APs may follow a collision avoidance mechanism to avoid sending calibration RS at the same time as other APs that have chosen the same AP as the assistant (or "best") AP. The collision avoidance mechanism may set a back-off time randomly, or configure a fixed pattern for each AP.

Following this, an un-calibrated AP may send a calibration reference signal to its chosen or "target" assistant AP. The calibration reference signals may contain both the target assistant AP ID information and un-calibrated AP ID. Therefore a calibrated AP can then ignore reference signals which are not intended for it.

For example, if a Cell-Specific Reference Signal (CRS) is re-used as a calibration reference signal, then the un-calibrated AP would send both its CRS and the CRS with the same configuration with target AP. By way of example an un-calibrated AP would send two kinds of calibration RS: a first calibration RS with its own CRS carrying its AP ID; and a second calibration RS that is a RS in common with target AP CRS which carries target AP ID.

Another example for sending a calibration RS from un-calibrated AP to target AP is specifying one window, then one un-calibrated AP can send its calibration RS in this window.

This calibration RS only carries un-calibrated AP ID. A different target AP has a different pattern, and this pattern could differentiate in time or frequency or sequence domain.

Subsequently, the target assistant AP estimates the channel coefficients, and sends the estimated channel coefficients to the un-calibrated AP via the X2 Interface. It is to be noted that channel coefficients are different to the above mentioned beamforming coefficients.

Then, the un-calibrated AP can complete the calibration using the received channel coefficients. Where an X2 interface is available, estimated channel information can be based on calibrated AP reference signals from more than one link, similar to as depicted in figure 5.

In some examples, calibration comprises aligning TX/RX chain response ratio for multiple TX/RX pairs of one AP or multiple APs. The calibration may change the RF chain response signal, for example multiplying one calibration coefficient to a received channel coefficient. Without proper antenna calibration, the transmitted or received signals may be distorted in both amplitude and phase.

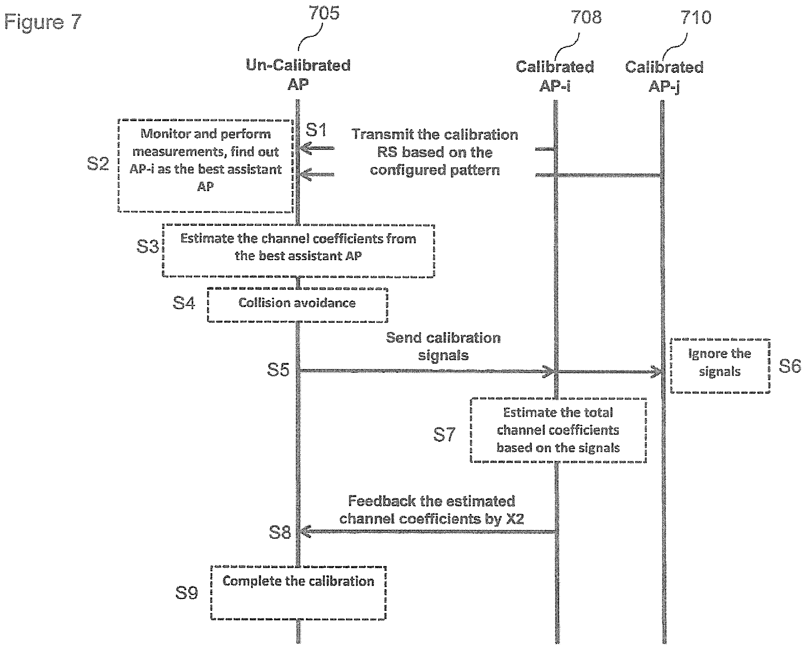

This method is described in more detail below with respect to Figure 7 which shows a calibration procedure where an X2 interface is available between APs.

In this example an uncalibrated AP is shown at 705. Also shown are two calibrated APs, AP-i 708 and AP-j 710. The uncalibrated AP 705 is on different layer to the APs 708 and 710.

At step S1 both the calibrated APs 708 and 710 transmit calibration RSs based on the configured pattern This pattern could be defined in 3GPP specification or by network OAM configuration.

At step S2 the uncalibrated AP 705 monitors and performs measurements on the calibration RSs it has received from calibrated APs 708 and 710. In this example the uncalibrated AP 705 determines calibrated AP-i 708 as the "best" assistant AP.

Accordingly, at step S3 the uncalibrated APs 705 estimate the channel coefficients from the best assistant AP, in this case calibrated AP-i 708.

At step S4 a collision avoidance mechanism is followed to ensure that signals do not collide with other uncalibrated APs which have chosen calibrated AP-i 708 as their best AP.

Then, at step S5 the uncalibrated AP 705 sends the calibration signals to both the calibrated AP-i 708 and the calibrated AP-j 710. As discussed above, the calibration signals may be sent along with IDs of the uncalibrated AP and the best assistant AP.

Accordingly, as shown at step S6 the calibrated AP-j 710 ignores the signals, since it is aware that it is not the best assistant AP.

At step S7 the best assistant AP 708 estimates the total channel coefficients based on the calibration signals received from the uncalibrated AP 705.

At step S8 the calibrated AP-i 708 sends the estimated channel coefficients to the uncalibrated AP 705 on the X2 interface.

At step S9 the uncalibrated AP 705 uses the estimated channel coefficients to complete the calibration.

Therefore in this embodiment there are two steps at which channel coefficients are calculated - step S3 at the un-calibrated AP 705, and step S7 at the calibrated AP 708. In this embodiment the estimation at step S3 is based on the information received at uncalibrated AP 705 from the best AP, and the estimation at step S7 is based on signals received at best AP 708 from multiple un-calibrated APs.

In another embodiment where the X2 interface is not available then the calibration can be completed over the air interface only. This may be applicable in a local area scenario where the X2 interface might not be feasible for all APs.

In such an embodiment each calibrated AP broadcasts specific signals containing its layer information, such as which layer it is on. It may also provide layer information for other APs in the cluster and/or network. These signals may be defined based on radio interface based synchronisation.

The uncalibrated APs monitor the broadcast specific signals from the calibrated AP. Based on the measurement results and layer information, the uncalibrated APs can then find out the best calibrated AP to act as the assistant AP.

The uncalibrated AP may then perform a collision avoidance mechanism in order to avoid sending the calibration RS at the same time as other APs which have chosen the same calibrated AP as the assistant or best AP. The collision avoidance mechanism may set a back-off time randomly, or configure one fixed pattern for each AP.

The uncalibrated AP then sends the calibration reference signals to its target persistent AP. The calibration reference signals may contain both target assistant AP ID information and uncalibrated AP ID information. Therefore other calibrated APs that receive the calibration reference signals can ignore them, when they know they are not the assistant AP.

Following this, the target assistant AP can estimate the channel coefficients, and sends the inverse of the estimated channel coefficient to the uncalibrated AP over the air interface only. According to some embodiments, using the inverse of the estimated channel coefficient means that the assistant AP can send its estimated channel information to the un-calibrated AP through air interface, without using backhaul.

Using inverse channel coefficient to calibrate the antenna is briefly illustrated as follows (assume AP0 is a calibrated AP, AP1 is a to be calibrated AP):

a. AP1 sends the calibration reference signals ($RS_{10}$) to AP0;

b. AP0 estimates the channel coefficients $H_{1-0}$ based on $RS_{10}$, and $H_{1-0}$ is channel coefficient including TX and RX chain coefficients with per subcarrier basis;

c. AP0 sends the inverse channel coefficient (1 / $H_{1\text{-}0}$) to AP1 by air interface, e.g. the information transmission can be conveyed by $RS_{01}$. The inverse channel coefficient will directly modulate the calibration RS upon RS sequence;

d. After demodulating, the complete baseband signals received by AP1 as follows:

$$R'_{0-1} = \frac{1}{H_{1-0}} \cdot RS \cdot \beta_{Tx} \cdot H \cdot \alpha_{Rx} = RS \cdot \frac{\beta_{Tx}}{\beta_{Rx}} \cdot \frac{\alpha_{Rx}}{\alpha_{Tx}}$$

Because the calibration RS comprises certain deterministic signals, after getting rid of the calibration signals, the received baseband signals will be:

$$R_{0-1} = \frac{R'_{0-1}}{RS} = \frac{\beta_{Tx}}{\beta_{Rx}} \cdot \frac{\alpha_{Rx}}{\alpha_{Tx}}$$

So for AP1, the calibration coefficient is equal to

$$\gamma = R_{0-1} \Longleftrightarrow ( \gamma \cdot \frac{\alpha_{Tx}}{\alpha_{Rx}} = \frac{\beta_{Tx}}{\beta_{Rx}})$$

The uncalibrated AP can then complete the calibration based on the received signals from the assistant AP. For the inverse method described above, a calibration coefficient calculation may be relied on from a received signal from a calibrated AP over the air interface only.

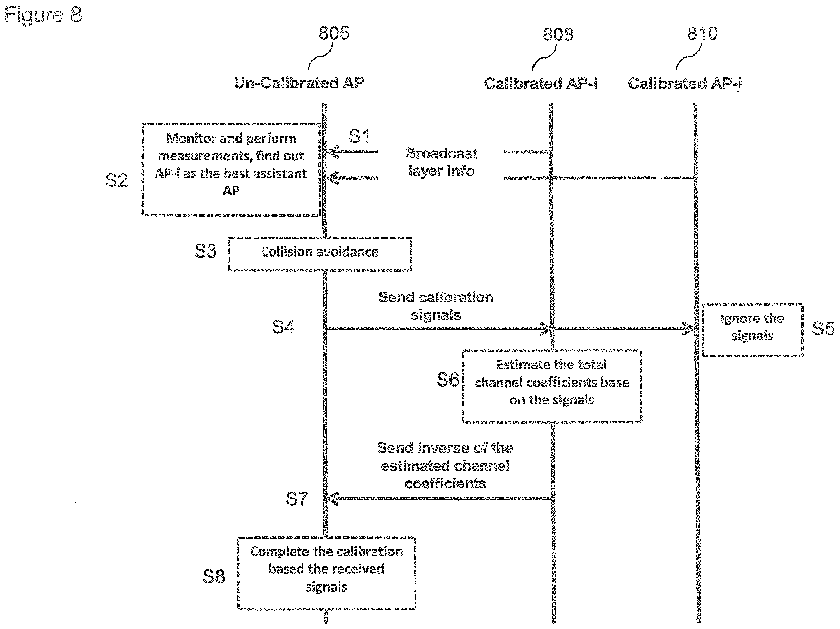

This method is described in more detail with respect to Figure 8.

This figure shows an uncalibrated AP 805, a calibrated AP-i 808, and a calibrated AP-j 810.

At step S1 the calibrated APs 808 and 810 broadcast layer information, which is received by uncalibrated AP 805. As discussed above this layer information may comprise information such as the layer upon which the transmitting calibrated AP resides, and may also contain information regarding the layers of other APs within the cluster and/or network.

As shown at step S2, the uncalibrated AP 805 is monitoring for this broadcast information. Once received, it uses the layer information to perform measurements, and in this case finds calibrated AP-i 808 to be the best assistant AP.

At step S3 a collision avoidance scheme is carried out.

At step S4 the uncalibrated AP 805 sends calibration signals to both the calibrated AP-i 808 and the calibrated AP-j 810. These calibration signals may also be comprised in or appended with ID information of the uncalibrated AP 805 and/or the assistant AP 808.

Accordingly calibrated AP 810 knows to ignore the received calibration signals since it is not the assistant AP, as shown at step S5.

At step S6 the calibrated AP-i 808 estimates the total channel coefficients based on the signals.

At step S7 the calibrated AP-i 808 sends the inverse of the estimated channel coefficients to the uncalibrated AP 805.

Then, at step S8 the uncalibrated AP 805 completes the calibration based on the received signals.

Although the application is not limited to any particular number of AP layers or strata, in some embodiments the number of layers is controlled so as to control any residual calibration error propagation. For example the number of layers might be constrained to 3 or 4 layers.

In some embodiments the higher layer AP will monitor the lower layer AP for calibration RS.

In some embodiments, the allocation of APs to different layers may rely on network OAM configuration and AP self monitoring. For example, one AP will monitor the calibrated AP from the layer 0 in the beginning; if it does not find a layer 0 calibration RS, this AP will assume itself as layer 0. It will be understood that the application is not limited to any particular method by which the APs are allocated to layers.

In some embodiments an AP can only communicate RS signals with an AP in an adjacent layer, and cannot communicate with an AP in the same layer. For example in a three layer system a first layer AP can only communicate RS signals with an AP in a second layer; a third layer AP can only communicate RS signals with an AP in the second layer, and an AP in the second layer can communicate RS signals with APs in the first and third layers.

In alternative embodiments multi-layer communication is enabled e.g. an AP in a layer can communicate with an AP in any other layer, regardless of whether it is an adjacent layer.

In some embodiments, the layered network comprises at least one self-calibrated root node. Therefore in embodiments where a higher layer node is calibrated with a lower layer node, at least one root node should be calibrated with a self-calibration approach within the whole network. This root node can act as a calibration "anchor" point. In some embodiments the calibration is an iterative process, so that the calibration can be refined over iterations. The root node calibration may also be modified over the iterations.

In embodiments the signalling between layers can be carried out in an explicit or implicit way.

In some embodiments a low layer AP has dedicated communication to each subordinated (i.e. lower layer) AP to fulfil calibration respectively.

Accordingly some embodiments provide a network-centric approach to AP to AP calibration based on wireless communication between those APs, whilst using the channel reciprocity property.

Accordingly some embodiments provide a flexible network topology for AP calibration.

It is also noted herein that while the above describes exemplifying embodiments of the invention, there are several variations and modifications which may be made to the disclosed solution without departing from the scope of the present invention.

The required data processing apparatus and functions of a base station apparatus, a communication device and any other appropriate station may be provided by means of one or more data processors. The described functions at each end may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples. The data processing may be distributed across several data processing modules. A data processor may be provided by means of, for example, at least one chip. Appropriate memory capacity can also be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Some embodiments may be implemented by computer software executable by a data processor of the communication device, such as in the processor entity, or by hardware, or by a combination of software and hardware.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed there is a further embodiment comprising a combination of one or more of any of the other embodiments previously discussed.

## Claims

1. A method comprising:

   sending (S4) a first reference signal from an uncalibrated node (805) to a calibrated node (808, 810) according to a collision avoidance mechanism, said uncalibrated node (805) comprised in a lower layer and said calibrated node (808, 810) comprised in a higher layer of a layered network, wherein the collision avoidance mechanism configures a fixed pattern for sending (S4) the first reference signal from the uncalibrated node (805) to the calibrated node (808, 810), wherein the first reference signal comprises identification information identifying the uncalibrated node (805) and the calibrated node (808, 810);

receiving (S7) at said uncalibrated node (805) a second reference signal modulated by an inverse of a channel coefficient from said calibrated node (808, 810), wherein the channel coefficient is estimated by the calibrated node (808, 810) based on the first reference signal;

determining a calibration coefficient at said uncalibrated node (805) by getting rid of the second reference signal; and

using (S8) said calibration coefficient for antenna calibration at said uncalibrated node (805).

2. A method as set forth in claim 1, wherein said calibrated node (808, 810) is in an adjacent layer to said uncalibrated node (805) in said layered network.

3. A method as set forth in claim 1 or claim 2, wherein said method comprises receiving (S1), from the calibrated node (808, 810), layer information at said uncalibrated node (805).

4. A method as set forth in claim 3, wherein said layer information received from a plurality of nodes, said plurality of nodes comprising said calibrated node (808, 810), said calibrated node (808, 810) selected by said uncalibrated node (805) on the basis of said received layer information.

5. A method comprising:

receiving (S4) a first reference signal at a calibrated node (808, 810) from a uncalibrated node (805) according to a collision avoidance mechanism, said calibrated node (808, 810) comprised in a higher layer and said uncalibrated node (805) comprised in a lower layer of a layered network, wherein the collision avoidance mechanism configures a fixed pattern for sending (S4) the first reference signal from the uncalibrated node (805) to the calibrated node (808, 810), wherein the first reference signal comprises identification information identifying the uncalibrated node (805) and the calibrated node (808, 810);

using (S6) said received first reference signal at said calibrated node (808, 810) to determine that said calibrated node (808, 810) has been selected to assist in the calibration of the uncalibrated node (805) and to estimate a channel coefficient; and

sending (S7) a second reference signal modulated by an inverse of the channel coefficient to said uncalibrated node (805) so that the uncalibrated node (805) can determine a calibration coefficient by getting rid of the second reference signal and use the calibration coefficient for antenna calibration at said uncalibrated node (805).

6. A method as set forth in claim 5, wherein said calibrated node (808, 810) is in an adjacent layer to said uncalibrated node (805) in said layered network.

7. A method as set forth in any preceding claim, wherein said layered network comprises at least one self-calibrated root node.

8. A method as set forth in any preceding claim, wherein said uncalibrated and calibrated nodes (805, 808, 810) comprise access points.

9. An apparatus comprising means for performing the method according to any one claims 1 to 4.

10. An apparatus comprising means for performing the method according to any one of claims 5 and 6.

**Patentansprüche**

1. Verfahren, das Folgendes umfasst:

Senden (S4) eines ersten Referenzsignals von einem nicht kalibrierten Knoten (805) an einen kalibrierten Knoten (808, 810) gemäß einem Kollisionsvermeidungsmechanismus, wobei der nicht kalibrierte Knoten (805) in einer niedrigeren Schicht enthalten ist und der kalibrierte Knoten (808, 810) in einer höheren Schicht eines geschichteten Netzwerks enthalten ist, wobei der Kollisionsvermeidungsmechanismus ein festes Muster zum Senden (S4) des ersten Referenzsignals vom nicht kalibrierten Knoten (805) an den kalibrierten Knoten (808, 810) auslegt, wobei das erste Referenzsignal Identifizierungsinformationen umfasst, die den nicht kalibrierten Knoten (805) und den kalibrierten Knoten (808, 810) identifizieren;

Empfangen (S7), an dem nicht kalibrierten Knoten (805), eines zweiten Referenzsignals, das durch ein Inverses eines Kanalkoeffizienten von dem kalibrierten Knoten (808, 810) moduliert wird, wobei der Kanalkoeffizient durch den kalibrierten Knoten (808, 810) basierend auf dem ersten Referenzsignal geschätzt wird;

Bestimmen eines Kalibrierungskoeffizienten an dem nicht kalibrierten Knoten (805) durch Beseitigen des zweiten Referenzsignals; und

Verwenden (S8) des Kalibrierungskoeffizienten zur Antennenkalibrierung an dem nicht kalibrierten Knoten (805) .

2. Verfahren nach Anspruch 1, wobei der kalibrierte Knoten (808, 810) in einer an den nicht kalibrierten Knoten (805) angrenzenden Schicht in dem geschichteten Netzwerk ist.

3. Verfahren nach Anspruch 1 oder Anspruch 2, wobei das Verfahren Empfangen (S1), von dem kalibrierten Knoten (808, 810), von Schichteninformationen an dem nicht kalibrierten Knoten (805) umfasst.

4. Verfahren nach Anspruch 3, wobei die Schichteninformationen von mehreren Knoten empfangen werden, wobei die mehreren Knoten den kalibrierten Knoten (808, 810) umfassen, wobei der kalibrierte Knoten (808, 810) durch den nicht kalibrierten Knoten (805) auf Grundlage der empfangenen Schichteninformationen ausgewählt wird.

5. Verfahren, das Folgendes umfasst:

Empfangen (S4) eines ersten Referenzsignals von einem nicht kalibrierten Knoten (805) an einem kalibrierten Knoten (808, 810) gemäß einem Kollisionsvermeidungsmechanismus, wobei der kalibrierte Knoten (808, 810) in einer höheren Schicht enthalten ist und der nicht kalibrierte Knoten (805) in einer niedrigeren Schicht eines geschichteten Netzwerks enthalten ist, wobei der Kollisionsvermeidungsmechanismus ein festes Muster zum Senden (S4) des ersten Referenzsignals vom nicht kalibrierten Knoten (805) zum kalibrierten Knoten (808, 810) auslegt, wobei das erste Referenzsignal Identifizierungsinformationen umfasst, die den nicht kalibrierten Knoten (805) und den kalibrierten Knoten (808, 810) identifizieren;

Verwenden (S6) des empfangenen ersten Referenzsignals an dem kalibrierten Knoten (808, 810) zum Bestimmen, dass der kalibrierte Knoten (808, 810) ausgewählt wurde, um die Kalibrierung des nicht kalibrierten Knotens (805) zu unterstützen und einen Kanalkoeffizienten zu schätzen; und

Senden (S7) eines zweiten Referenzsignals, das durch ein Inverses des Kanalkoeffizienten moduliert wird, an den nicht kalibrierten Knoten (805), sodass der nicht kalibrierte Knoten (805) durch Beseitigen des zweiten Referenzsignals einen Kalibrierungskoeffizienten bestimmen und den Kalibrierungskoeffizienten zur Antennenkalibrierung an dem nicht kalibrierten Knoten (805) verwenden kann.

6. Verfahren nach Anspruch 5, wobei der kalibrierte Knoten (808, 810) in einer an den nicht kalibrierten Knoten (805) angrenzenden Schicht in dem geschichteten Netzwerk ist.

7. Verfahren nach einem der vorhergehenden Ansprüche, wobei das geschichtete Netzwerk zumindest einen selbstkalibrierten Wurzelknoten (805) umfasst.

8. Verfahren nach einem der vorhergehenden Ansprüche, wobei der nicht kalibrierte und der kalibrierte Knoten (805, 808, 810) Zugangspunkte umfassen.

9. Einrichtung, umfassend Mittel zum Durchführen des Verfahrens nach einem der Ansprüche 1 bis 4.

10. Einrichtung, umfassend Mittel zum Durchführen des Verfahrens nach einem der Ansprüche 5 und 6.

**Revendications**

1. Procédé comprenant :

l'envoi (S4) d'un premier signal de référence d'un noeud non étalonné (805) à un noeud étalonné (808, 810) selon un mécanisme d'évitement de collision, ledit noeud non étalonné (805) étant compris dans une couche inférieure et ledit noeud étalonné (808, 810) étant compris dans une couche supérieure d'un réseau en couches, le mécanisme d'évitement de collision configurant un motif fixe pour envoyer (S4) le premier signal de référence du noeud non étalonné (805) au noeud étalonné (808, 810), le premier signal de référence comprenant une information d'identification identifiant le noeud non étalonné (805) et le noeud étalonné (808, 810) ;

la réception (S7) au niveau dudit noeud non étalonné (805) d'un second signal de référence modulé par un inverse d'un coefficient de canal provenant dudit noeud étalonné (808, 810), le coefficient de canal étant estimé par le noeud étalonné (808, 810) sur la base du premier signal de référence ;

la détermination d'un coefficient d'étalonnage au niveau dudit noeud non étalonné (805) en se débarrassant du second signal de référence ; et

l'utilisation (S8) dudit coefficient d'étalonnage pour l'étalonnage d'antenne au niveau dudit noeud non étalonné (805).

2. Procédé selon la revendication 1, ledit noeud étalonné (808, 810) étant dans une couche adjacente audit noeud non étalonné (805) dans ledit réseau en couches.

3. Procédé selon la revendication 1 ou la revendication 2, ledit procédé comprenant la réception (S1), à partir du noeud étalonné (808, 810), d'informations de couche au niveau dudit noeud non étalonné (805).

4. Procédé selon la revendication 3, ladite information de couche étant reçue d'une pluralité de noeuds, ladite pluralité de noeuds comprenant ledit noeud étalonné (808, 810), ledit noeud étalonné (808, 810) étant sélectionné par ledit noeud non étalonné (805) en fonction de ladite information de couche reçue.

5. Procédé comprenant :

la réception (S4) d'un premier signal de référence au niveau d'un noeud étalonné (808, 810) à partir d'un noeud non étalonné (805) selon un mécanisme d'évitement de collision, ledit noeud étalonné (808, 810) étant compris dans une couche supérieure et ledit noeud non étalonné (805) étant compris dans une couche inférieure d'un réseau en couches, le mécanisme d'évitement de collision configurant un motif fixe pour envoyer (S4) le premier signal de référence du noeud non étalonné (805) au noeud étalonné (808, 810), le premier signal de référence comprenant une information d'identification identifiant le noeud non étalonné (805) et le noeud étalonné (808, 810) ;

l'utilisation (S6) dudit premier signal de référence reçu au niveau dudit noeud étalonné (808, 810) pour déterminer que ledit noeud étalonné (808, 810) a été sélectionné pour aider à l'étalonnage du noeud non étalonné (805) et pour estimer un coefficient de canal ; et

l'envoi (S7) d'un second signal de référence modulé par un inverse du coefficient de canal audit noeud non étalonné (805) de sorte que le noeud non étalonné (805) puisse déterminer un coefficient d'étalonnage en se débarrassant du second signal de référence et utiliser le coefficient d'étalonnage pour étalonner l'antenne audit noeud non étalonné (805).

6. Procédé selon la revendication 5, ledit noeud étalonné (808, 810) étant dans une couche adjacente au niveau dudit noeud non étalonné (805) dans ledit réseau en couches.

7. Procédé selon n'importe quelle revendication précédente, ledit réseau en couches comprenant au moins un noeud racine auto-étalonné (805).

8. Procédé selon n'importe quelle revendication précédente, lesdits noeuds non étalonné et étalonné (805, 808, 810) comprenant des points d'accès.

9. Appareil comprenant des moyens pour exécuter le procédé selon l'une quelconque des revendications 1 à 4.

10. Appareil comprenant des moyens pour exécuter le procédé selon l'une quelconque des revendications 5 et 6.

Figure 1

Figure 2

Figure 3

200
208
205
203
201
204
202
207  206

300
304
303
302
301

EP 3 155 734 B1

## Figure 4

408

422

404

Send DL calibration RS

Send UL calibration RS

420

Feed back DL channel coefficient

424

## Figure 5

524

AP0 send the estimated coefficient $H_{1-0}$ to AP1

508

Coefficient of channel: H    520

505

Send the calibration $RS_{10}$

Send the calibration $RS_{01}$

AP1                        AP0

522

Figure 6

Figure 7

**705** Un-Calibrated AP

**708** Calibrated AP-i

**710** Calibrated AP-j

S1 — Transmit the calibration RS based on the configured pattern

S2 — Monitor and perform measurements, find out AP-i as the best assistant AP

S3 — Estimate the channel coefficients from the best assistant AP

S4 — Collision avoidance

S5 — Send calibration signals

S6 — Ignore the signals

S7 — Estimate the total channel coefficients based on the signals

S8 — Feedback the estimated channel coefficients by X2

S9 — Complete the calibration

Figure 8

**EP 3 155 734 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1551143 A1
- US 2005128953 A1